# EUROPÄISCHE PATENTSCHRIFT

(11) **EP 2 542 836 B1**
(45) Veröffentlichungstag und Bekanntmachung des Hinweises auf die Patenterteilung: **07.09.2016**
(21) Anmeldenummer: 10785366.5
(22) Anmeldetag: 04.12.2010
(51) Int. Cl.: F23R 3/40, B60K 6/26, F23C 13/08, F23C 13/00

(54) **VORRICHTUNG ZUR BEREITSTELLUNG VON HEISSEN ABGASEN**
DEVICE FOR PROVIDING HOT EXHAUST GASES
DISPOSITIF POUR FOURNIR DES GAZ D'ÉCHAPPEMENT CHAUDS

(30) Priorität: 05.03.2010 DE 102010010272
(43) Veröffentlichungstag der Anmeldung: 09.01.2013
(73) Patentinhaber: Daimler AG, 70327 Stuttgart (DE)
(72) Erfinder: STARK, Holger, 71573 Allmersbach im Tal (DE); MEX, Ulf-Michael, 70190 Stuttgart (DE); KONRAD, Gerhard, 89081 Ulm (DE); HINSENKAMP, Gert, 73730 Esslingen (DE); STEINHAUSER, Benjamin, 88410 Bad Wurzach-Arnach (DE)
(74) Vertreter: JENSEN & SON
(86) Internationale Anmeldenummer: PCT/EP2010/007379
(87) Internationale Veröffentlichungsnummer: WO 2011/107132

(56) Entgegenhaltungen:
- WO-A1-2004/033963
- DE-A1- 2 254 890
- DE-A1- 2 337 807
- DE-A1- 10 250 360
- DE-A1- 10 306 234
- US-A- 5 855 112
- US-A1- 2002 157 881

## Beschreibung

Die Erfindung betrifft ein Brennstoffzellensystem mit einer Vorrichtung zur Bereitstellung von heißen Abgasen und einer Turbine nach der im Oberbegriff von Anspruch 1 näher definierten Art.

Prinzipiell ist es bekannt, Turbinen mit heißen Abgasen einer Verbrennung zu betreiben. So zeigt die US 2002/0157881 A1 einen Aufbau, bei dem über eine über einen Brenner angefeuerte Turbine und einen Generator elektrische Energie für ein Fahrzeug bereitgestellt wird. Die Besonderheit bei dieser US-Veröffentlichung besteht nun darin, dass der Brenner in die Turbine beziehungsweise das Turbineneinlassgehäuse integriert ausgebildet ist. Der Brenner selbst ist dabei als Flammbrenner ausgebildet, welcher eine möglichst hohe Temperatur zum Betrieb der Turbine bereitstellt. Der Nachteil bei dem Aufbau besteht nun darin, dass ein solcher Brenner aufgrund der sehr hohen Temperaturen und der vergleichsweise schlecht zu kontrollierenden Verbrennung starke Emissionen von unerwünschten Stoffen, beispielsweise NOₓ-Emissionen, verursacht. Daher ist in der US-Veröffentlichung ein optionaler katalytischer Reaktor vorgesehen, welcher in der Art eines Abgaskatalysators nach einem Verbrennungsmotor Reste nach der Entspannung des heißen Abgases der Verbrennung in der Turbine umsetzt. Dies verursacht die Erzeugung einer gewissen Restwärme im Abgas, welche vergleichsweise aufwändig über einen Wärmetauscher wieder zurückgewonnen werden muss. Außerdem wird der hinsichtlich des Brenners optimierte kompakte Aufbau durch den zusätzlichen Abgaskatalysator wieder vergrößert.

Ferner beschreibt die US 5.855.112 A eine Gasturbine zum Antreiben eines elektrischen Generators. Der Gesamtaufbau dient dann zum Antreiben eines Fahrzeugs über die erzeugte elektrische Leistung. Die Gasturbine hat dabei den Brenner für den Treibstoff in das Gehäuse der Gastrubine integriert. Die DE 22 54 890 A1 beschreibt ein Betriebsverfahren für eine solche Gasturbine.

Aus der DE 23 37 807 A1 ist ferner eine Verbrennungsvorrichtung in Form eines katalytischer Brenners bekannt. Aus der WO 2004/033963 A1 ist ebenfalls ein solcher katalytischer Brenner bekannt. Er kann insbesondere zur Nachverbrennung von Abgasen eingesetzt werden, welche in einem Reformierungsprozess zur Bereitstellung von wasserstoffhaltigem Gas aus Kohlenwasserstoffen, z.B. bei einen Brennstoffzellensystem mit Reformierung, anfallen. Die Verbrennungszone ist dabei mit offenporigem Keramikschaum gefüllt.

Die gattungsgemäße DE 103 06 234 A1 beschreibt eine Vorrichtung zur Luftversorgung einer Brennstoffzelle. Diese ist als Turbolader mit elektrischer Unterstützung ausgebildet. Im Bereich des Expanders beziehungsweise der Turbine werden dazu heiße Gase entspannt, um zumindest einen Teil der für die Luftversorgung benötigten Energie bereitzustellen. Zur Erzeugung der heißen Gase ist ein Brenner in Form eines Porenbrenners oder eines katalytischen Brenners vorgesehen. Dieser verbrennt die Abgase der Brennstoffzelle und kann bei Bedarf zusätzlich mit dem Brennstoff der Brennstoffzelle versorgt werden. Aus dem japanischen Abstract JP 59075571 A ist ein vergleichbarer Aufbau ebenfalls bekannt.

Die Aufbauten sind zwar in der Lage heiße Gase in dem Brennstoffzellensystem zur Verfügung zu stellen, es ist jedoch häufig nicht sichergestellt, dass die gesamten in dem Abgas der Brennstoffzelle enthaltenen unerwünschten Reste, beispielsweise Reste von Kohlenwasserstoff beim Einsatz eines Gaserzeugungssystems, wie in dem JP-Abstract, oder Reste vom Wasserstoff beim Einsatz eines Wasserstoffspeichers, wie in der DE-Schrift dargestellt, vollständig umgesetzt werden. Dies wird typischerweise daran liegen, dass ein sicheres und zuverlässiges Zünden der katalytischen Reaktion in dem Brenner häufig nur schwer oder nicht ausreichend reproduzierbar erreicht werden kann.

Es ist daher die Aufgabe der hier vorliegenden Erfindung, ein Brennstoffzellensystem mit einer Vorrichtung zur Bereitstellung von heißen Abgasen zum Antrieb einer Turbine anzugeben, welche die in den zum Antrieb der Turbine genutzten brennbaren Gasen vorhandene chemische Energie bestmöglich nutzt und ohne weitere Maßnahmen ein Abgas bereitstellt, welches keine schädlichen Emissionen enthält.

Erfindungsgemäß wird diese Aufgabe durch ein Brennstoffzellensystem mit den Merkmalen im kennzeichnenden Teil des Anspruchs 1 gelöst. Vorteilhafte Weiterbildungen der erfindungsgemäßen Vorrichtung ergeben sich aus den abhängigen Ansprüchen.

Wie aus dem eingangs erläuterten Stand der Technik bekannt, werden Brenner und Turbinen in Brennstoffzellensystemen eingesetzt, um Restenergie aus den Abgasen eines Brennstoffzellensystems zurückzugewinnen. Diese Restenergie wird dann in Form von Druck und Wärme in einer Turbine umgesetzt. Die Turbine kann beispielsweise einen Verdichter treiben und/oder einen elektrischen Generator zur Bereitstellung von elektrischer Energie. Diese Rückgewinnung von Energie aus dem Brennstoffzellensystem hat darüber hinaus den Vorteil, dass die Reststoffe in den Abgasen der Brennstoffzelle vollständig umgesetzt werden, sodass keine Emissionen an Kohlenwasserstoffen und Wasserstoff an die Umgebung gelangen. Idealerweise ist der Brenner dabei als katalytischer Brenner ausgeführt, sodass auch NOₓ-Emissionen aufgrund der flammenlosen Verbrennung bei vergleichsweise niedriger Temperatur von ca. 600° C verhindert werden können.

Die erfindungsgemäße Lösung sieht also vor, dass der direkt an die Turbine angeschlossene oder ganz oder teilweise in die Turbine beziehungsweise das Turbinengehäuse integriert ausgeführte Brenner eine Verbrennungszone aufweist, welche ein offenporiges Material mit hoher spezifischer Oberfläche hat. Dieser Aufbau als Porenbrenner oder Matrixbrenner beziehungsweise Matrix-Strahlungsbrenner erlaubt es ohne eine offene Flamme, eine sehr gleichmäßige und effiziente Verbrennung zu realisieren. Damit kann mit kleinstem Bauraum unmittelbar an die Turbine anschließend oder in diese, beispielsweise in das Turbinengehäuse, integriert oder in Form einer Kartusche in das Turbinengehäuse eingeschoben, ein sehr kompakter Aufbau erzielt werden. Durch die positiven Eigenschaften eines Matrixbrenners beziehungsweise eines Porenbrenners und die von ihm abgestrahite thermische Energie kann eine sehr effiziente Verbrennung annähernd aller Bestandteile des zu verbrennenden Gasstroms erreicht werden. Der Aufbau ist dabei außerordentlich kompakt und effizient zu realisieren. Dabei wird der Brenner zumindest zeitweise mit Frischluft versorgt ist, wobei der Brenner eine Zündeinrichtung aufweist, durch welche eine Verbrennung zumindest der Frischluft und des Brennstoffs der Brennstoffzelle zündbar ist. Dem Brenner wird also, zusätzlich zu dem Abgas der Brennstoffzelle und der zumindest zeitweisen Zufuhr von Brennstoff, Frischluft zugeführt. Diese Frischluft, welche bevorzugt zusammen mit dem Brennstoff zugeführt wird, ermöglicht es dann, über eine in dem Brenner angeordneten Zündeinrichtung eine Verbrennung der Luft und des Brennstoffs zu zünden. Durch diese Zündung in beispielsweise Strömungsrichtung vor der eigentlichen Verbrennungszone, also beispielsweise dem porösen Aufbau eines Porenbrenners, gelingt es, den Brenner immer sicher und zuverlässig durch die vorgelagerte Zündung zu starten. Damit wird sichergestellt, dass die gewünschten heißen Abgase, welche beispielsweise zum Antrieb einer Turbine genutzt werden können, immer dann bereitstehen, wenn diese benötigt werden. Außerdem wird erreicht, dass der Brennstoff und das Abgas aus der Brennstoffzelle immer vollständig im Bereich des Brenners umgesetzt werden kann, sodass keine Emissionen an Wasserstoff, Kohlenwasserstoffen, Kohlenmonoxid Stickoxiden (NOₓ) oder Ähnlichem an die Umgebung des Brennstoffzellensystems gelangen.

Erfindungsgemäß ist es vorgesehen, dass Frischluft und Brennstoff der Brennstoffzelle in Strömungsrichtung nach der Zündeinrichtung und vor der Verbrennungszone mit den Abgasen aus der Brennstoffzelle zusammengeführt sind. Dieser Aufbau erlaubt eine sehr kontrollierbare und zuverlässige Zündung des Brennstoff zusammen mit der zugeführten Frischluft, während die Abgase dann erst nach erfolgter Zündung vor oder beim Erreichen der Verbrennungszone mit diesem bereits brennenden Gemisch zusammengeführt sind. Dies hat den Vorteil, dass unabhängig von der Zusammensetzung der Abgase in jedem Fall ein zündfähiges Gemisch erreicht werden kann, da im Bereich der Zündeinrichtung lediglich der Brennstoff und die Frischluft vorliegt, deren Mischungsverhältnis entsprechend leicht kontrollierbar ist, ohne dass über eine aufwändige Sensorik beispielsweise der Restbrennstoffgehalt und der Restsauerstoffgehalt in den Abgasen ermittelt werden müsste.

In einer besonders günstigen Ausführungsform der erfindungsgemäßen Vorrichtung weist das offenporige Material mit hoher spezifischer Oberfläche zumindest ein katalytisch aktives Material auf. Der Brenner ist dann also nicht als reiner Porenbrenner, Matrixbrenner oder dergleichen ausgeführt, sondern gleichzeitig als katalytischer Brenner, welcher ohne offene Flamme die entsprechenden Ausgangsstoffe sicher und zuverlässig umsetzt.

Die Zündeinrichtung kann dabei grundsätzlich auf verschiedene Arten ausgebildet sein. So sind beispielsweise Zündeinrichtung in Form von Glühelementen, beispielsweise als keramischer Glühzünder oder als Glühwendel, denkbar. Besonders effizient ist jedoch eine Zündeinrichtung, welche das Stoffgemisch über Funken zündet. Über einen solchen Funken wird sicher und zuverlässig mit vergleichsweise kleiner Energiemenge eine Zündung des zündfähigen Gemischs aus Luft und Brennstoff erreicht, wobei über eine Zündeinrichtung, welche mit Funken arbeitet, die Zündung sehr schnell erreicht werden kann, ohne dass eine Vorglühdauer oder Ähnliches notwendig ist.

Weitere vorteilhafte Ausgestaltungen der erfindungsgemäßen Vorrichtung ergeben sich aus den restlichen abhängigen Ansprüchen und werden anhand des Ausführungsbeispiels deutlich, welches nachfolgend unter Bezugnahme auf die Figuren näher erläutert wird.

Dabei zeigen:
- Fig. 1: eine erste mögliche Ausführungsform eines Brennstoffzellensystems mit einer Vorrichtung gemäß der Erfindung;
- Fig. 2: eine weitere mögliche Ausführungsform eines Brennstoffzellensystems mit einer Vorrichtung gemäß der Erfindung;
- Fig. 3: den Brenner in einer ersten möglichen Ausführungsform;
- Fig. 4: den Brenner gemäß der Erfindung; und
- Fig. 5: den Brenner in einer weiteren alternativen Ausführungsform.

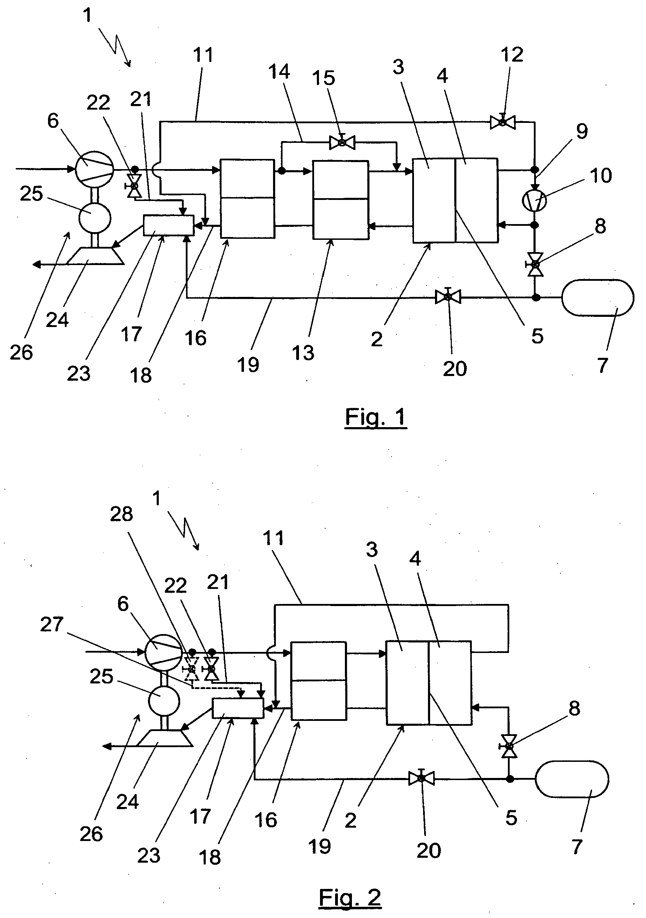

In den Figuren 1 und 2 sind zwei verschiedene Aufbauten von Brennstoffzellensystemen 1 beschrieben, welche die bevorzugte, wenn auch nicht alleinige, Verwendung für die erfindungsgemäße Vorrichtung zur Bereitstellung von heißen Abgasen sind. Den Kern des Brennstoffzellensystems 1 bildet eine Brennstoffzelle 2, welche beispielsweise als Stapel von PEM-Brennstoffzellen aufgebaut ist. Dabei wird ein Kathodenraum 3 und ein Anodenraum 4 der Brennstoffzelle 2 durch protonenleitende Membranen 5 voneinander getrennt. Als Oxidationsmittel zum Betrieb der Brennstoffzelle 2 dient typischerweise der Sauerstoff in der Luft, wozu Luft über eine Luftfördereinrichtung 6 in den Kathodenraum 3 gefördert wird. Dem Anodenraum 4 wird Wasserstoff oder ein wasserstoffhaltiges Gas zugeführt. In dem hier dargestellten Ausführungsbeispiel soll dem Anodenraum 4 der Brennstoffzelle 2 Wasserstoff aus einem Druckgasspeicher 7 zugeführt werden. Der in diesem Druckgasspeicher 7 unter einem hohen Druck gespeicherte Wasserstoff wird über eine Ventileinrichtung 8 dem Anodenraum 4 zugeführt und dabei auf ein Druckniveau entspannt, welches für den Betrieb der Brennstoffzelle 2 geeignet ist. Beim Einsatz von reinem Wasserstoff als Brennstoff für die Brennstoffzelle 2 wird dieser dem Anodenraum 4 typischerweise mit einem höheren Volumenstrom zur Verfügung gestellt, als in dem Anodenraum 4 der Brennstoffzelle 2 umgesetzt werden kann. Dies dient einer möglichst gleichmäßigen Versorgung der gesamten zur Verfügung stehenden aktiven Fläche der protonenleitenden Membranen 5 mit einer ausreichenden Menge an Wasserstoff. Der unverbrauchte Wasserstoff wird dann aus dem Anodenraum 4 über eine Rezirkulationsleitung 9 abgeführt und mittels einer Rezirkulationsfördereinrichtung 10, beispielsweise einem Wasserstoffrezirkulationsgebläse und/oder einer Gasstrahlpumpe oder dergleichen, zusammen mit frischem Wasserstoff aus dem Druckgasspeicher 7 wieder dem Anodenbereich 4 zugeführt. Mit der Zeit reichert sich im Bereich der Rezirkulationsleitung 9 Stickstoff an, welcher durch die Membranen 5 hindurch in den Anodenraum 4 gelangt ist, ebenso eine geringe Menge an Produktwasser, welche im Anodenraum 4 der Brennstoffzelle 2 entsteht. Da diese inerten Stoffe in der Brennstoffzelle nicht umgesetzt werden können, verringern diese die Wasserstoffkonzentration in dem Volumen der Rezirkulationsleitung 9 und des Anodenraums 4 mit der Zeit. Von Zeit zu Zeit werden daher die im Bereich der Rezirkulationsleitung 9 befindlichen Stoffe über eine Ablassleitung 11 und eine darin angeordnete Ventileinrichtung 12 abgelassen, um die Wasserstoffkonzentration im Anodenraum 4 aufrechterhalten zu können. Da bei diesem Ablassen über die Ablassleitung 11, die sogenannte Purge-Leitung, immer auch eine gewisse Menge an Restwasserstoff aus dem System entweicht, muss der abgelassene Stoffstrom in der später noch näher beschriebenen Art und Weise nachbehandelt werden, um keine Emissionen an die Umgebung zuzulassen.

Die Membranen 5 der Brennstoffzelle 3 sind vergleichsweise empfindlich gegen eine Austrocknung. Da der über die Luftfördereinrichtung 6 geförderte Volumenstrom an Luft typischerweise trocken ist, kann ein entsprechend hoher Luftvolumenstrom die Austrocknung der Membranen 5 beschleunigen. Daher kann in dem Brennstoffzellensystem 1 ein Befeuchter 13 vorgesehen sein, welcher beispielsweise als Gas-Gas-Befeuchter ausgebildet ist. Der Kern eines solchen Befeuchters 13 sind für Wasserdampf durchlässige Membranen. Auf der einen Seite der Membranen strömt der trockene von der Luftfördereinrichtung 6 geförderte Gasstrom. Auf der anderen Seite der Membranen strömt der Abgasstrom aus dem Kathodenraum 3 der Brennstoffzelle 2. Da der größte Teil des Produktwassers im Kathodenraum 3 der Brennstoffzelle 2 entsteht, ist dieser Abgasstrom entsprechend mit Flüssigkeit in Form von Wasserdampf und Tröpfchen beladen. Der Wasserdampf kann durch die Membranen hindurch in dem Befeuchter 13 die trockene Zuluft befeuchten, sodass einerseits die Abluft entfeuchtet und andererseits durch die befeuchtete Zuluft eine Befeuchtung der Membranen 5 der Brennstoffzelle 2 sichergestellt werden kann. Da nicht in allen Situationen die volle Befeuchtung gewünscht ist, kann außerdem um den Befeuchter 13, hier beispielhaft im Bereich der Zuluftleitung zum Kathodenraum 3, prinzipiell ist dies aber auch analog im Bereich der Abluftleitung vom Kathodenraum 3 möglich, ein Bypass 14 angeordnet sein. Dieser kann über eine Ventileinrichtung 15 so gesteuert werden, dass der durch den Befeuchter 13 strömende zu befeuchtende Volumenstrom entsprechend aufgeteilt wird. Damit kann eine einstellbare Feuchte im Bereich des Kathodenraums 3 erzielt werden.

Der Aufbau des Brennstoffzellensystems 1 in Figur 1 zeigt außerdem einen Ladeluftkühler 16, welcher ebenfalls von der Zuluft nach der Luftfördereinrichtung 6 einerseits und der Abluft aus dem Kathodenraum 3 andererseits durchströmt wird. Nach der Luftfördereinrichtung 6 wird die geförderte Luft entsprechend heiß sein, da diese sich bei der Verdichtung entsprechend erhitzt. Die Abluft aus dem Kathodenraum 3 ist dagegen kühler. Durch den Ladeluftkühler 16 kommt es nun zu einem Wärmeaustausch zwischen diesen beiden Gasströmen, sodass die zu dem Kathodenraum 3 geförderte Luft abgekühlt in die von dem Kathodenraum 3 abströmende Luft erwärmt wird. Durch die abgekühlte Luft nach der Luftfördereinrichtung 6 wird die Gefahr eines Austrocknens der Membranen 5 der Brennstoffzelle weiter verringert. Die in den Ladeluftkühler 16 in die Abluft von dem Kathodenraum 3 eingetragene Wärme kann hier nutzbringend genutzt werden, wie es später noch näher beschrieben wird.

Die erwärmte Abluft aus dem Ladeluftkühler 16 strömt über eine Abluftleitung 18 dann in einen Brenner 17, in welchem sie zusammen mit Restwasserstoff aus der Ablassleitung 11 und bei Bedarf über eine Wasserstoffleitung 19 und eine Ventileinrichtung 20 mit zugeführten Wasserstoff aus dem Druckgasspeicher 7 umgesetzt werden kann. Außerdem wird dem Brenner 17 Frischluft über eine Frischluftleitung 21 mit einer Ventileinrichtung 22 zugeführt, welche dem Zuluftstrom zum Kathodenbereich nach der Luftfördereinrichtung 6 entnommen ist. In dem Brenner 17 werden nun in einer Verbrennungszone 23 diese Ausgangsstoffe in einer Verbrennung umgesetzt. Die Verbrennungszone 23 kann dabei insbesondere mit einem offenporigen Material mit hoher spezifischer Oberfläche ausgestattet sein. Der Brenner 17 kann also beispielsweise als Porenbrenner oder Matrixbrenner ausgebildet sein.

Die aus den beschriebenen Ausgangsstoffen erzeugten heißen Abgase gelangen bei dem Ausführungsbeispiel des Brennstoffzellensystems 1 in Figur 1 dann in den Bereich einer Turbine 24 und werden im Bereich dieser Turbine 24 entspannt und abgekühlt. Dadurch lässt sich über die Turbine 24 mechanische Energie aus dem heißen Abgasstrom des Brennstoffzellensystems zurückgewinnen. Über die Turbine 24 kann in dem hier dargestellten Ausführungsbeispiel unmittelbar die Luftfördereinrichtung 6 mit mechanischer Energie versorgt werden. Außerdem kann eine elektrische Maschine 25 vorgesehen sein, welche bei entsprechendem Energieüberschuss im Bereich der Turbine 24 generatorisch betrieben werden kann, um zusätzlich elektrische Energie aus dem heißen Abgasstrom zurückzugewinnen. Wird durch die Luftfördereinrichtung mehr Energie benötigt als durch die Turbine 24 bereitgestellt werden kann, dann kann die elektrische Maschine 25 auch motorisch betrieben werden. In diesem Fall würde sie die benötigte Energiedifferenz zur Förderung des Luftstroms über die Luftfördereinrichtung 6 bereitstellen. Dieser Aufbau aus Turbine 24, elektrischer Maschine 25 und Luftfördereinrichtung 6, welche bei diesem Aufbau typischerweise als Strömungsverdichter ausgebildet ist, wird im Allgemeinen auch als elektrischer Turbolader 26 oder ETC (Electric Turbo Charger) 26 bezeichnet.

Neben einem solchen ETC 26 wäre selbstverständlich auch eine andere Nutzung der heißen Abgase denkbar, beispielsweise in einem System zur Erzeugung eines wasserstoffhaltigen Gases aus einem kohlenwasserstoffhaltigen Ausgangsstoff über Dampfreformierung, autotherme Reformierung oder dergleichen. Außerdem wäre es selbstverständlich denkbar, die Turbine 24 nicht in einem ETC anzuordnen, sondern in einem freilaufenden Turbolader, welcher auf der einen Seite die Turbine 24 und auf der anderen Seite lediglich die Luftfördereinrichtung 6 als Strömungsverdichter aufweist. Der Strömungsverdichter des freilaufenden Turboladers könnte beispielsweise eine Stufe der Luftfördereinrichtung 6 bilden. Außerdem wäre es natürlich denkbar, den Strömungsverdichter auf beliebige andere Art anzutreiben und die Turbine 24 lediglich mit einer elektrischen Maschine 25 beziehungsweise einem elektrischen Generator 25 zu koppeln. In diesem Fall könnte über die Turbine 24 elektrische Energie bereitgestellt werden. Ebenso wäre es denkbar, die von der Turbine 24 erzeugte mechanische Energie über eine entsprechende Getriebeeinheit direkt mechanisch zum Antrieb von Hilfsaggregaten und/oder zur Unterstützung des Antriebs eines Fahrzeugs zu nutzen.

Dabei wird in dem Brenner 17 das gesamte Abgas aus dem Bereich der Brennstoffzelle 2 genutzt. Durch die optionale Zufuhr von Wasserstoff über die Wasserstoffleitung 19 und die Ventileinrichtung 20 ist es auch möglich, die Turbine gezielt zu beheizen. In solchen Fällen ließe sich beispielsweise ein Boostbetrieb des Brennstoffzellensystem 1 realisieren, bei dem durch die Zugabe von Wasserstoff in den Brenner 17 vorübergehend eine vergleichsweise hohe Energiemenge über die Turbine 24 bereitgestellt werden kann. Diese könnte über die elektrische Maschine 25 als Generator dann in Strom umgewandelt werden, welcher beispielsweise in einem Fahrzeugsystem genutzt werden könnte, um dynamische Leistungsanforderungen zu befriedigen, welche die Brennstoffzelle 2 so nicht ausreichend schnell decken kann. Dies erlaubt beispielsweise einen Boostbetrieb oder im Notfall auch einen Betrieb bei abgeschalteter Brennstoffzelle 2.

In der Darstellung der Figur 2 ist nun ein vergleichbarer Systemaufbau zu erkennen, welcher so alternativ zu dem oben dargestellten Brennstoffzellensystem 1 eingesetzt werden könnte. Der Aufbau unterscheidet sich im Wesentlichen dadurch, dass keine Rezirkulationsleitung 9 um den Anodenraum 4 der Brennstoffzelle 2 existiert. Bei diesem Aufbau wird der Anodenraum 4 also nur mit einem geringen Überschuss an Wasserstoff versorgt, welcher durch die analog vorhandene Ablassleitung 11, welche hier kein Ventil aufweist, direkt dem Brenner 17 zugeführt und zusammen mit der Abluft aus dem Kathodenraum 3 in diesem umgesetzt wird. Es kommt hier also zu einer kontinuierlichen Umsetzung der beiden Abgasströme aus der Brennstoffzelle 2, wobei auch hier zusätzliche Luft und/oder zusätzlicher Wasserstoff über die Wasserstoffleitung 19 beziehungsweise die Frischluftleitung 21 zugeführt werden kann. Bei dem Aufbau wurde außerdem auf einen Befeuchter 13 sowie Bypassleitung 14 und Ventileinrichtung 15 verzichtet. Je nach Typ der eingesetzten Membranen 5 ist ein solcher Betrieb ohne Befeuchtung mittlerweile auch bei PEM-Brennstoffzellen denkbar. Prinzipiell sind sicher auch Aufbauten denkbar, bei denen auf einen Ladluftkühler 16 verzichtet werden kann. Dieser hat bei dem hier beschriebenen Aufbau jedoch den Vorteil, dass die Abluft aus dem Kathodenraum 3 der Brennstoffzelle 2 entsprechend erwärmt wird, sodass dem Brenner 17 bereits ein warmer Abgasstrom zur Verfügung gestellt werden kann. Außerdem schont ein entsprechend abgekühlter Zuluftstrom zum Kathodenraum 3 der Brennstoffzelle 2 die Membranen 5, was insbesondere beim Einsatz ohne einen Befeuchter 13 von Vorteil für die Lebensdauer der Membranen 5 ist. Damit lässt sich die Energieausnutzung und die Abgastemperatur des Brenners 17 steigern, sodass der Ladeluftkühler 16 hier hinsichtlich der Lebensdauer der Membranen 5 und der Ausnutzung der eingesetzten Energie Vorteile bietet.

In der Darstellung der Figur 2 ist ferner parallel zur Frischluftleitung 21 mit ihrer Ventileinrichtung 22 eine optionale Kühlluftleitung 27 mit einer Ventileinrichtung 28 zu erkennen. Auf deren Funktionalität wird später noch näher eingegangen. Auch bei der Darstellung des Brennstoffzellensystems 1 in der Ausführungsform gemäß Figur 2 ist der Aufbau mit einem elektrischen Turbolader 26 versehen, wobei auch hier für den elektrischen Turbolader 26 das oben bereits ausgeführte gilt und dieser rein beispielhaft zu verstehen ist.

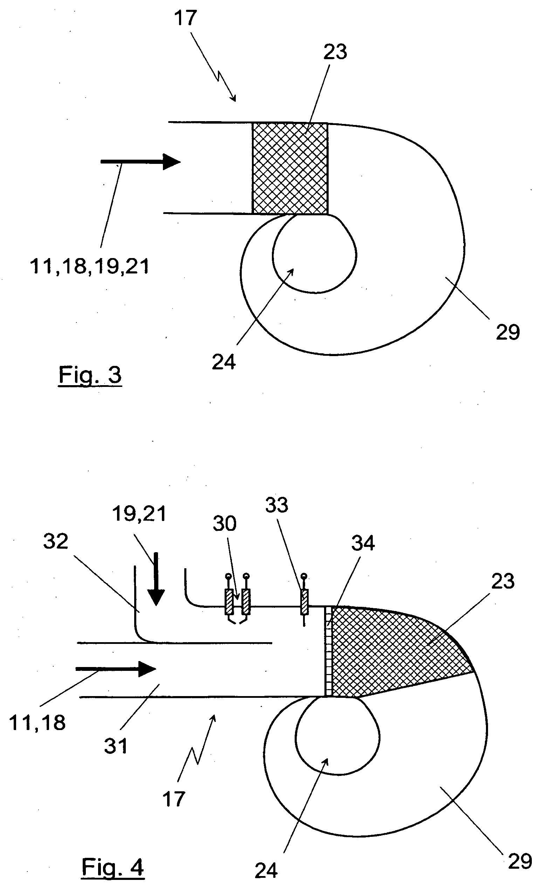

Der wesentliche Aspekt bei den in den Figuren 1 und 2 beschriebenen Brennstoffzellensystemen 1 liegt nun im Aufbau des Brenners 17. In der Darstellung der Figur 3 ist nun ein allgemeines Beispiel für den Brenner 17 der Vorrichtung zur Bereitstellung von heißem Abgas zu erkennen. Der Brenner 17 ist in der in Figur 3 dargestellten einfachsten Ausführungsform so aufgebaut, dass der Brenner 17 praktisch lediglich aus der Verbrennungszone 23 besteht. Diese Verbrennungszone 23 besteht ihrerseits aus einem Material, welches offenporig ausgebildet ist und eine hohe spezifische Oberfläche aufweist. Das Material kann beispielsweise ein Gestrick aus ungerichteten Fasern, eine Ansammlung von gerichteten Fasern, ein offenporiger Schaum oder ein offenporiger Sinterwerkstoff, beispielsweise auf metallischer Basis oder auf keramischer Basis, sein. Außerdem wäre es denkbar, wie in einem späteren Ausführungsbeispiel noch beschrieben wird, dass die Verbrennungszone 23 aus einem Netz oder Gewebe aus metallischem oder keramischem Material besteht und als sogenannter Matrixbrenner beziehungsweise Matrix-Strahlungsbrenner ausgebildet ist.

In der Darstellung der Figur 3 handelt es sich bei dem Brenner 17 um einen katalytischen Brenner. Das Material der Verbrennungszone 23 ist also mit einem katalytisch aktiven Material versehen, welches beispielsweise fein verteilt in der offenporigen Struktur vorhanden ist oder zumindest Teile der Oberfläche der offenporigen Struktur in Form einer Beschichtung bedeckt. Als geeignetes katalytisches Material kann beispielsweise Palladium, Platin oder Ähnliches eingesetzt werden. Aufgrund der Ausbildung als katalytischer Brenner 17 werden im Bereich der Verbrennungszone 23 des Brenners 17 die zu dem Brenner 17 strömenden Abgase der Brennstoffzelle 2, welche hier als Gasgemisch durch einen Pfeil angedeutet sind und aus der Ablassleitung 11, der Abluftleitung 18, der Wasserstoffleitung 19 und der Frischluftleitung 21 stammen beziehungsweise stammen können, in den Bereich der Verbrennungszone 23 zugeführt. Dort findet eine katalytische Reaktion beziehungsweise eine katalytische Verbrennung statt, sodass, ohne dass sich eine Flamme ausbildet eine Umsetzung der Stoffe in den Abgasen der Brennstoffzelle 2 und dem gegebenenfalls zugeführten zusätzlichen Wasserstoff aus der Wasserstoffleitung 19 erfolgt. Die katalytische Verbrennung garantiert dabei neben der Bereitstellung von heißen Verbrennungsabgasen auf einem Temperaturniveau von ca. 600° C zum Antrieb der Turbine 24 eine annähernd vollständige Umsetzung der brennbaren Stoffe in dem zum Brenner 17 strömenden Gasstrom, sodass Emissionen weitgehend vermieden werden können.

In der Darstellung der Figur 3 ist außerdem zu erkennen, dass die Verbrennungszone 23 in den Eingangsbereich eines spiralförmigen Turbinengehäuses 29 der Turbine 24 integriert ausgebildet ist. Dieser Aufbau erlaubt es, mit minimalem Bauraum Turbine 24 und Brenner 17 bereitzustellen. Außerdem wird die Strecke, über welche der Volumenstrom an heißen Abgasen aus dem Brenner 17 zur Turbine 24 geführt werden muss, minimiert. Dadurch werden einerseits Wärmeverluste vermieden und andererseits kann auf teure hochtemperaturbeständige Materialien für die Länge der Leitungsführung weitgehend verzichtet werden. Lediglich das Turbinengehäuse muss aus einem entsprechenden hochtemperaturfesten Material ausgebildet sein oder zumindest im Bereich seiner Innenwandungen mit einem derartigen Material, beispielsweise auf keramischer Basis, beschichtet werden. Der in Figur 3 dargestellte Aufbau mit dem Brenner 17, welcher unmittelbar an die Turbine 24 beziehungsweise in das Turbinengehäuse 29 der Turbine 24 integriert ausgeführt ist, erlaubt so neben einem minimalen Bauraumbedarf auch einen sehr effizienten Betrieb mit einer hocheffizienten Nutzung der heißen Abgase. Durch die katalytische Beschichtung des offenporigen Materials mit hoher spezifischer Oberfläche im Bereich der Verbrennungszone 23 wird dabei eine vollständige Umsetzung von allen in dem Abgas der Brennstoffzeile 2 enthaltenen brennbaren Reststoffen erreicht, sodass keine schädlichen Emissionen an die Umgebung des Brennstoffzellensystems 1 abgegeben werden.

Eine eventuelle Problematik bei katalytischen Brennern 17 kann darin liegen, dass diese in bestimmten Betriebssituationen gegebenenfalls schwer zünden oder ihre sogenannte Light-off-Temperatur erst spät erreichen, sodass unverbrannte Stoffe durch den Bereich der Verbrennungszone 23 hindurch gelangen können. Damit entstehen einerseits Emissionen und andererseits können Stoffe, welche gewinnbringend in thermische Energie umgewandelt werden könnten, ungenutzt aus dem Brennstoffzellensystem 1 strömen. Um dies zu verhindern, verfügt der Aufbau des Brenners 17 gemäß der Erfindung in dem Turbinengehäuse 29, wie in der Darstellung der Figur 4 zu erkennen ist, über eine Zündeinrichtung 30. Der Aufbau in der Darstellung der Figur 4 des Brenners 17 ist ebenfalls mit einer Verbrennungszone 23 mit einem Porenmaterial ausgebildet. Außerdem ist über ein Leitungselement 31 das Abgas aus der Brennstoffzelle 2, also insbesondere aus der Ablassleitung 11 und der Abluftleitung 18, zugeführt. Über ein weiteres Leitungselement 32 wird Wasserstoff aus der Wasserstoffleitung 19 und Frischluft aus der Frischluftleitung 21 zugeführt. Die Zündeinrichtung 30 ist dabei im Bereich des Leitungselements 32 angeordnet, sodass in ihrem Bereich immer ein gut zündfähiges Gemisch aus Wasserstoff und Frischluft vorliegt. Um zu überprüfen, ob die Zündung im Bereich der Zündeinrichtung 30 auch sicher erfolgt ist, kann in dem Brenner 17 ausserdem eine Überwachungselektrode 33 vorgesehen sein, über welche eine erfolgte Zündung verifiziert werden kann.

Ansonsten ist der in Figur 4 dargestellte Brenner 17 ähnlich dem im Rahmen der Figur 3 beschriebenen Brenner aufgebaut. Die Verbrennungszone, welche auch hier ein offenporiges Material in der Art eines Porenbrenners aufweist, ist dabei weiter als in der Darstellung der Figur 3 in das Turbinengehäuse 29 integriert, sodass ein sehr kompakter Aufbau entsteht, bei welchem die heißen Abgase aus dem Bereich des Brenners 17 nur über eine sehr geringe Wegstrecke strömen müssen. Auch hier ist die Verbrennungszone 23 insbesondere wieder mit einem katalytisch aktiven Material versehen, sodass der Brenner 17 als katalytischer Brenner ausgebildet ist. Ein vergleichbarer Aufbau wäre jedoch auch bei einem Brenner 17 ohne katalytische Beschichtung denkbar.

In der Darstellung der Figur 4 ist in Strömungsrichtung der zur Umsetzung beziehungsweise Verbrennung strömenden Gase vor der Verbrennungszone 23 ausserdem eine Flammensperre 34 angeordnet. Eine solche Flammensperre ist dabei aus dem allgemeinen Stand der Technik bekannt und bei verschiedenen Typen von Brennern üblich. Sie besteht typischerweise aus einem Lochblech oder ähnlichem und hält Flammen davon zurück, aus dem Bereich des Brenners in den Bereich der einströmenden Gase zurückzuschlagen.

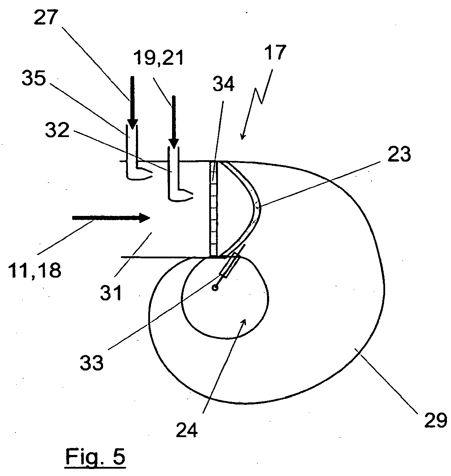

In der Darstellung der Figur 5 ist nun eine weitere mögliche Ausführungsform des Brenners 17 dargestellt. Auch hier ist der Brenner 17 in das Turbinengehäuse 29 der Turbine 24 weitgehend integriert ausgebildet. Die Verbrennungszone 23 ist als Verbrennungszone eines Matrixbrenners beziehungsweise Matrix-Strahlungsbrenners ausgebildet. Dies bedeutet, dass die Verbrennungszone 23 als typischerweise gewölbtes Element aus einem Gewebe oder Netz, typischerweise auf metallischer oder keramischer Basis, ausgebildet ist. Beispielhaft kann die Verbrennungszone 23 Teil einer Kugelkalotte, eines Zylinders oder Kegels sein. Das Material der Matrix, welche hier die Verbrennungszone 23 bildet kann ebenfalls ein katalytisches Material aufweisen, beispielsweise in dem einige oder alle der eingesetzten Fasern, um das Gewebe beziehungsweise Netz auszubilden, eine katalytische Beschichtung aufweisen.

Zusätzlich zu diesem Aufbau, wie er vergleichbar auch in den vorhergehenden Figuren schon beschrieben wurde, befindet sich im Aufbau des Brenners 17 gemäß Figur 5 ausserdem ein drittes Leitungselement 35, über welches Kühlluft aus dem Bereich der im Rahmen der Figur 2 beschriebenen Kühlluftleitung 27 zugeführt werden kann. Diese Kühlluft kann in bestimmten Betriebssituationen zu einer Verringerung der Temperatur der Verbrennung durch einen entsprechenden Luftüberschuss führen, so dass beispielsweise zulässige Betriebstemperaturen der Turbine 24 und/oder der Verbrennungszone 23 nicht überschritten werden. Damit kann bei weiterhin gewährleisteter vollständiger Verbrennung der eingesetzten Ausgangsstoffe eine Beschädigung beispielsweise der katalytischen Beschichtung der Verbrennungszone 23 durch Überhitzung verhindert werden.

Alles in allem baut der Brenner 17 dabei·außerordentlich kompakt und kann entweder unmittelbar in das Turbinengehäuse 29 integriert ausgeführt werden oder sich unmittelbar an dieses Turbinengehäuse anschließen. Ausserdem ist es denkbar, den Brenner 17 in der Art einer eigenständigen Kartusche auszubilden, welche erst bei der Montage in den Eingangsbereich des Turbinengehäuses 29 eingeschoben wird.

## Patentansprüche

1. Brennstoffzellensystem (1) mit einer Turbine (24) and mit einer Vorrichtung zur Bereitstellung von heißen Abgasen zum Antrieb der Turbine (24), welche einen Brenner (17), dessen Verbrennungszone (23) direkt an oder in den Gaseinlass der Turbine (24) integriert ausgeführt ist, aufweist, wobei dem Brenner (17) wenigstens ein brennbares Gas oder Gasgemisch zugeführt ist,wobeidie Verbrennungszone (23) ein offenporiges Material mit hoher spezifischer Oberfläche aufweist, und
mit einer Brennstoffzelle (2), wobei der Brenner (17) zumindest mit Abgasen aus der Brennstoffzelle (2) versorgt ist, wobei der Brenner (17) zumindest zeitweise mit Frischluft versorgt ist, und wobei der Brenner (17) eine Zündeinrichtung (30) aufweist, durch welche eine Verbrennung zumindest der Frischluft und eines Brennstoffs der Brennstoffzelle (2) zündbar ist,
**dadurch gekennzeichnet, dass**
die Frischluft und der Brennstoff der Brennstoffzelle (2) in Strömungsrichtung nach der Zündeinrichtung (30) und vor der Verbrennungszone (23) mit den Abgasen aus der Brennstoffzelle (2) zusammengeführt sind.

2. Brennstoffzellensystem (1) nach Anspruch 1,
**dadurch gekennzeichnet, dass**
das offenporige Material mit hoher spezifischer Oberfläche zumindest ein katalytisch aktives Material aufweist.

3. Brennstoffzellensystem (1) nach Anspruch 2,
**dadurch gekennzeichnet, dass**
das katalytisch aktive Material Palladium aufweist.

4. Brennstoffzellensystem (1) nach Anspruch 1, 2 oder 3,
**dadurch gekennzeichnet, dass**
die Frischluft und der Brennstoff aus der Brennstoffzelle (2) so in den Bereich der Zündeinrichtung (30) geführt sind, dass lokal ein zündfähiges Gemisch der beiden Stoffe vorliegt.

5. Brennstoffzellensystem (1) nach einem der Ansprüche 1 bis 4,
**dadurch gekennzeichnet, dass**
die Zündeinrichtung (30) das Stoffgemisch über Funken zündet.

6. Brennstoffzellensystem (1) nach einem der Ansprüche 1 bis 5,
**dadurch gekennzeichnet, dass**
die Turbine (24) mit einem Verdichter (6) für einen Prozessluftstrom zu der Brennstoffzelle (2) und/oder einer elektrischen Maschine (17) gekoppelt ist.

## Claims

1. Fuel cell system (1) comprising a turbine (24) and a device for the provision of hot exhaust gases for driving the turbine (24), the device comprising a burner (17) with a combustion zone (23) directly integrated with or into the gas inlet of the turbine (24), wherein at least one combustible gas or gas mixture is fed to the burner (17), wherein the combustion zone (23) has a porous material with a large specific surface area, and
further comprising a fuel cell (2), wherein the burner (17) is at least supplied with exhaust gases from the fuel cell (2), wherein the burner (17) is at least temporarily supplied with fresh air, and wherein the burner (17) comprises an ignition device (30), whereby a combustion of at least the fresh air and a fuel of the fuel cell (2) can be ignited, **characterised in that**
the fresh air and the fuel of the fuel cell (2) are merged with the exhaust gases from the fuel cell (2) downstream of the ignition device (30) and upstream of the combustion zone (23) as viewed in the direction of flow.

2. Fuel cell system (1) according to claim 1,
**characterised in that**
the porous material with a large specific surface area comprises at least one catalytically active material.

3. Fuel cell system (1) according to claim 2,
**characterised in that**
the catalytically active material comprises palladium.

4. Fuel cell system (1) according to claim 1, 2 or 3,
**characterised in that**
the fresh air and the fuel of the fuel cell (2) are guided into the region of the ignition device (30) in such a way that an ignitable mixture of the two materials is present locally.

5. Fuel cell system (1) according to any of claims 1 to 4,
**characterised in that**
the ignition device (30) ignites the material mixture by way of sparks.

6. Fuel cell system (1) according to any of claims 1 to 5,
**characterised in that**
the turbine (24) is coupled to a compressor (6) for a process air flow to the fuel cell (2) and/or to an electric machine (17).

## Revendications

1. Système (1) de piles à combustible comprenant une turbine (24) et un dispositif destiné à mettre à disposition des gaz d'échappement chauds destinés à entraîner la turbine (24), qui présente un brûleur, dont la zone de combustion (23) est intégrée directement sur l'admission de gaz de la turbine (24) ou dans cette dernière, un gaz ou un mélange gazeux inflammable étant amené au brûleur (17), la zone de combustion (23) présentant un matériau à pores ouverts ayant une grande surface spécifique, et une pile à combustible (2), le brûleur (17) étant alimenté au moins en gaz d'échappement provenant de la pile à combustible (2), le brûleur (17) étant alimenté au moins partiellement en air frais, et le brûleur (17) présentant un dispositif d'allumage qui permet d'amorcer une combustion au moins de l'air frais et d'un combustible de la pile à combustible (2), **caractérisé en ce que** l'air frais et le combustible de la pile à combustible (2) sont réunis dans le sens de l'écoulement en aval du dispositif d'allumage (30) et en amont de la zone de combustion (23) conjointement avec les gaz d'échappement provenant de la pile à combustible (2).

2. Système de pile à combustible (1) selon la revendication 1, **caractérisé en ce que** le matériau à pores ouverts présentant une grande surface spécifique présente au moins une matière catalytique active.

3. Système de pile à combustible (1) selon la revendication 2, **caractérisé en ce que** la matière catalytique active comprend du palladium.

4. Système de pile à combustible (1) selon la revendication 1, 2 ou 3, **caractérisé en ce que** l'air frais et le combustible provenant de la pile à combustible (2) sont guidés dans la zone du dispositif d'allumage (30) de sorte que localement se produise un mélange des deux matières pouvant être amorcées.

5. Système de pile à combustible (1) selon l'une quelconque des revendications 1 à 4, **caractérisé en ce que** le dispositif d'allumage (30) allume le mélange de matière au moyen d'étincelles.

6. Système de pile à combustible (1) selon l'une quelconque des revendications 1 à 5, **caractérisé en ce que** la turbine (24) dotée d'un compresseur (6) pour le flux d'air de traitement est couplée à la pile à combustible (2) et/ou à une machine électrique (17).
